**Europäisches Patentamt**

**European Patent Office**

**Office européen des brevets**

(19)

(11) Veröffentlichungsnummer: **0 209 683**
**B1**

(12) # EUROPÄISCHE PATENTSCHRIFT

(45) Veröffentlichungstag der Patentschrift:
07.03.90

(21) Anmeldenummer: 86107500.0

(22) Anmeldetag: 03.06.86

(51) Int. Cl.⁴: **H01M 2/06**, F16L 59/00,
F16L 59/06
// H01M10/39

(54) **Thermische Isolierung.**

(30) Priorität: 11.07.85 DE 3524706

(43) Veröffentlichungstag der Anmeldung:
28.01.87 Patentblatt 87/5

(45) Bekanntmachung des Hinweises auf die Patenterteilung:
07.03.90 Patentblatt 90/10

(84) Benannte Vertragsstaaten:
DE FR GB IT

(56) Entgegenhaltungen:
DE-A- 3 003 798
DE-A- 3 247 968
US-A- 4 235 956
US-A- 4 327 162

(73) Patentinhaber: Asea Brown Boveri Aktiengesellschaft,
Kallstadter Strasse 1, D-6800 Mannheim-Käfertal(DE)

(72) Erfinder: Hasenauer, Dieter, Dipl.-Ing.,
Freudenbergstrasse 13, D-6940 Weinheim(DE)

(74) Vertreter: Rupprecht, Klaus, Dipl.-Ing. et al, c/o Asea
Brown Boveri Aktiengesellschaft Zentralbereich
Patente Postfach 100351, D-6800 Mannheim 1(DE)

ACTORUM AG

## Beschreibung

Die Erfindung bezieht sich auf eine thermische Isolierung gemäß dem Oberbegriff des Patentanspruches 1.

Solche thermischen Isolierungen kommen in der Energietechnik bei Einrichtungen zur Anwendung, bei denen der Verlust von Wärme vermieden werden soll. Thermische Isolierungen werden vor allem bei Hochtemperatur-Speicherbatterien auf der Basis von Alkalimetall und Chalkogen verwendet, die von einer Wärmedämmung umgeben werden müssen, um eine Abkühlung der Speicherzellen vor allem in den Betriebspausen zu verhindern.

Aus der DE-OS 32 47 968 ist eine thermische Isolierung zur Bildung einer Hochtemperatur-Speicherbatterie bekannt. Die thermische Isolierung wird durch ein doppelwandiges Gehäuse nach innen und außen begrenzt. Zwischen den Gehäusewandungen befindet sich ein evakuierter Raum, der mit einem den Wärmefluß hemmenden Isoliermaterial ausgefüllt ist. Die Öffnung des Gehäuses, die den Innenraum der thermischen Isolierung freigibt, wird durch einen Stopfen verschlossen. Der Stopfen ist ebenfalls doppelwandig ausgebildet. Zwischen seinen Gehäusewandungen ist ein Isoliermaterial angeordnet. Der Stopfen ist von Durchführungen durchsetzt, durch welche Kühlleitungen und elektrische Anschlußleitungen hindurchgeführt sind.

Nachteilig ist bei dieser thermischen Isolierung, daß im Bereich des Stopfens ein sehr großer Wärmeverlust erfolgt. Dies geschieht zum einen deshalb, weil das Stopfenmaterial keinen hohen Wärmeleitkoeffizienten und keine hohe mechanische Festigkeit aufweist. Der Stopfen verfügt ferner über keine flexible umlaufende Oberfläche zur luftdichten Abdichtung des Innenraums. Als weiterer Nachteil sind die Durchführungen im Bereich des Stopfens anzusehen, die einen ebenfalls sehr großen Wärmeverlust bewirken.

Der Erfindung liegt deshalb die Aufgabe zugrunde, eine thermische Isolierung zu schaffen, bei der die Wärmeverluste auf ein Minimum reduziert werden.

Die Aufgabe wird erfindungsgemäß durch die kennzeichnenden Merkmale des Patentanspruches 1 gelöst.

Durch die Trennung von Verschlußbereich und Durchführungsbereich ist es möglich, das Gehäuse, welche die thermische Isolierung nach innen und außen begrenzt, wahlweise durch einen Stopfen oder durch Verschlußbleche zu verschließen. Insbesondere besteht die Möglichkeit das Gehäuse durch Verschlußbleche zu verschließen, die mit dem übrigen Gehäuse verschraubt oder verschweißt sind. Erfindungsgemäß werden die Durchführungen für die Kühlleitungen und elektrischen Versorgungsleitungen auf der dem Verschlußbereich gegenüberliegenden Seite angeordnet. Die Begrenzungswand einer jeden Durchführung ist als zylinderischer Faltenbalg ausgebildet. Hierdurch wird eine mechanische Verlängerung der Durchführung bewirkt. Jede Begrenzungswand ist höchstens 0,1 bis 0,2 mm dick und aus Edelstahl gefertigt. Die Begrenzungswand einer jeden Durchführung ist mit der inneren und äußeren Gehäusewandung des die thermische Isolierung begrenzenden Gehäuses vakuumdicht verschweißt. Je größer die Anzahl der Falten in der Begrenzungswand einer jeden Durchführung ist, um so größer ist auch die Wärmedämmung. Die so ausgebildete Begrenzungswand weist neben einem kleinen Wärmeverlust auch den Vorteil auf, daß sie eine flexible Verbindung zwischen dem inneren und äußeren Gehäuse bildet, so daß das Gehäuse insgesamt besser auf mechanische Belastungen reagieren kann. Der Wärmeverlust im Bereich der Durchführungen beträgt höchstens 10 % des gesamten Wärmeverlustes. 42 % der in der thermischen Isolierung gespeicherten Wärme geht über den Verschlußbereich verloren.

Dadurch, daß der Verschlußbereich frei von Durchführungen ist, können für den Verschluß anstelle eines Stopfens auch Verschlußbleche verwendet werden. Dies bedeutet, daß das Gehäuse, welches die thermische Isolierung begrenzt, kleiner ausgebildet werden kann, und dennoch einen größeren Innenraum aufweist.

Weitere erfindungswesentliche Merkmale sind in den Unteransprüchen gekennzeichnet.

Die Erfindung wird nachfolgend anhand von Zeichnungen erläutert.

Es zeigen:

Figur 1: Eine thermische Isolierung, deren Gehäuse durch einen Stopfen verschlossen ist, im Vertikalschnitt.

Figur 2: eine Variante der in Figur 1 dargestellten thermischen Isolierung, ebenfalls im Vertikalschnitt.

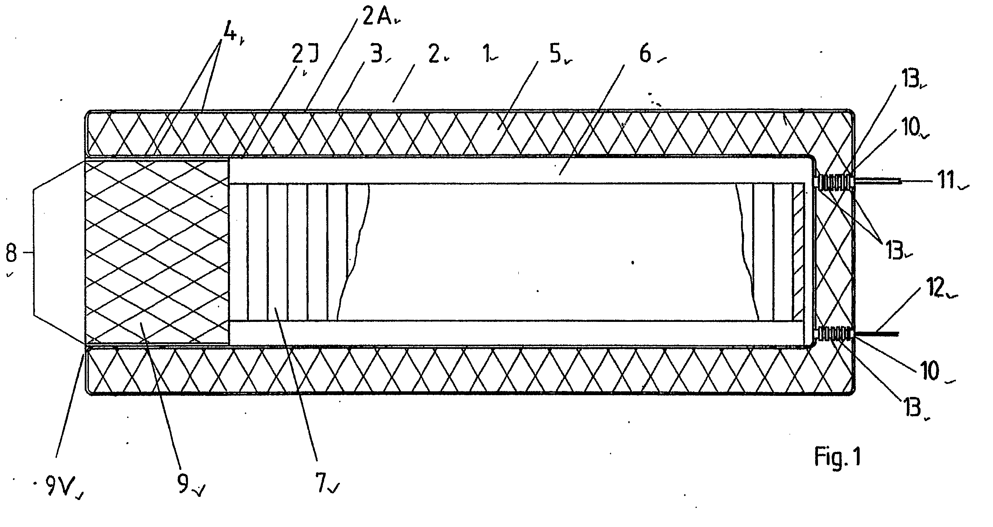

Die in Figur 1 dargestellte thermische Isolierung wird nach innen und außen durch ein quaderförmiges Gehäuse 2 begrenzt, daß doppelwandig ausgebildet ist. Der Abstand zwischen der äußeren und der inneren Gehäusewandung 2A und 2I ist so bemessen, daß zwischen beiden ein Raum 4 gebildet wird. Die Gehäusewandungen 2A und 2I sind vakuumdicht verschweißt, so daß der zwischen ihnen gebildete Raum 4 evakuiert werden kann. Der Raum 4 ist zusätzlich mit einem Isoliermaterial 5 ausgefüllt. Hierfür eignen sich pulverförmige Isoliermaterialien sowie Fasern und mehrschichtige Lagen aus Glimmerfolie oder Glaspapier. Das Gehäuse 2 weist einen Innenraum 6 auf. Dieser ist geeignet, vor Wärmeverlusten zu schützende Bauelemente aufzunehmen. Bei dem hier dargestellten Ausführungsbeispiel sind im Inneren des Raumes 6 eine Vielzahl von Speicherzellen 7 auf der Basis von Natrium und Schwefel angeordnet. Die Speicherzellen 7 sind nur schematisch dargestellt. Wiederaufladbare elektrochemische Speicherzellen 7 auf der Basis von Natrium und Schwefel arbeiten bei einer Temperatur von 350°C. Während des Betriebs der Speicherzellen wird die erforderliche Wärme in ausreichender Menge von den Speicherzellen 7 selbst erzeugt. In den Betriebspausen jedoch müssen die Speicherzellen von einer thermischen Isolierung umgeben sein, die sicherstellt, daß die Arbeitstemperatur der Speicherzellen auch noch nach einigen Ruhestunden im Inneren der Isolierung vorherrscht, so daß die Speicherzellen auch nach einer längeren Pause sofort wieder arbeiten. Um die Speicherzellen in den Innenraum der Isolierung 1 einsetzen zu können, ist das Gehäuse 2 mit einer Öffnung 8 versehen. Diese befindet sich an der ersten Stirnseite des Gehäuses 2 und ist durch einen Stopfen 9 verschlossen. Der Kern des Stopfens wird ebenfalls durch ein Isoliermaterial 5 gebildet, das so gewählt ist, daß die Wärmeverluste im Bereich der Öffnung 8 und des Stopfens 9 auf einen Minimalwert reduziert sind. Wie Figur 1 weiter zu entnehmen ist, ist das Gehäuse auf der der Öffnung 8 gegenüberliegenden Seite mit Durchführungen 10 für Kühlleitungen 11 und elektrische Anschlußleitungen 12 versehen. Jede Durchführung 10 wird durch eine Begrenzungswand 13 begrenzt, die als zylindrischer Faltenbalg ausgebildet ist. Die Durchführungen 10 durchsetzen das thermische Isolierungsmaterial 5 und sind mit der äußeren und inneren Gehäusewandung 2A, 2I vakuumdicht verschweißt. Die Begrenzungswände 13 der Durchführungen 10 sind aus Edelstahl gefertigt und höchstens 0,1 bis 0,2 mm dick. Da die Begrenzungswände 13 als Faltenbalge ausgebildet sind, wird die Verbindung zwischen dem Innenraum 6 und dem Außenbereich der thermischen Isolierung 1 verlängert, und dadurch der Wärmeverlust verringert. Je größer die Anzahl der Falten in jeder Begrenzungswand 13 ist, um so geringer ist der Wärmeverlust. Der Abstand zwischen den Falten muß jedoch so gewählt werden, daß sie sich nicht berühren, da sonst der Wärmeverlust nur geringfügig gemindert werden kann.

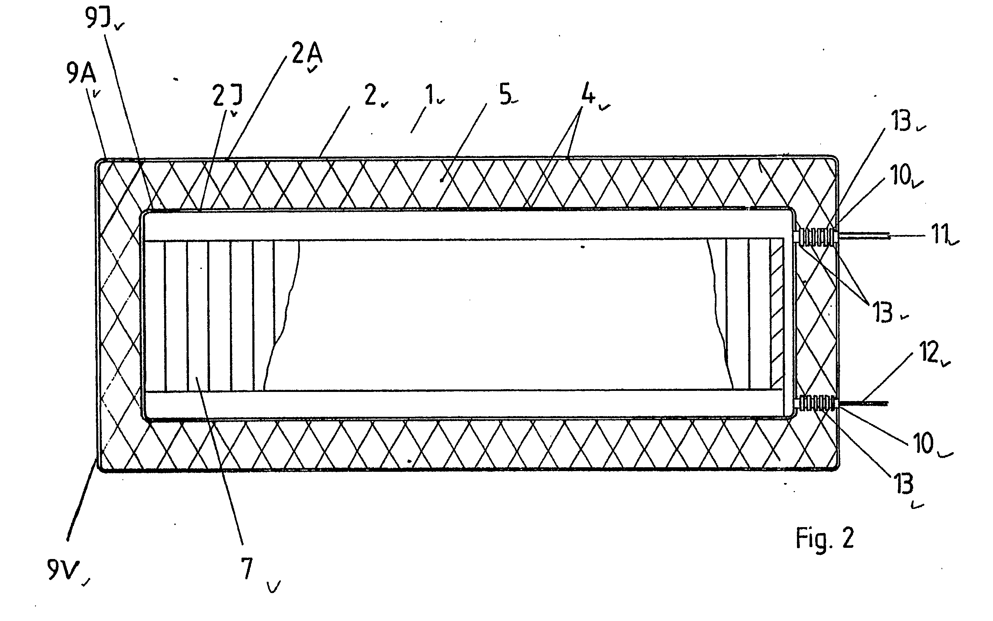

Figur 2 zeigt eine weitere Variante der erfindungsgemäßen thermischen Isolierung 1. Diese wird ebenfalls durch ein doppelwandiges Gehäuse 2 nach innen und außen begrenzt. Der Abstand zwischen der inneren und äußeren Gehäusewandung 2A und 2I ist auch hierbei so gewählt, daß wiederum ein Raum 4 gebildet wird, der das Isoliermaterial 5 aufnimmt. Der Raum 4 ist zusätzlich evakuiert. Der Innenraum 6 der thermischen Isolierung ist für die Aufnahme von Speicherzellen 7 auf der Basis von Natrium und Schwefel vorgesehen. Abweichend von dem in Figur 1 dargestellten Ausführungsbeispiel ist die hier gezeigte thermische Isolierung 1 dauerhaft durch Verschlußbleche 9A und 9I verschlossen. Das innere Verschlußblech 9I ist dauerhaft mit der inneren Gehäusewandung 2I verschweißt, während das äußere Verschlußblech 9A ebenfalls dauerhaft mit der äußeren Gehäusewandung 2A verschweißt ist. Der Abstand zwischen den Verschlußblechen 9A und 9I ist so gewählt, daß zwischen ihnen der gleiche Abstand wie zwischen den beiden Gehäusewandungen 2A und 2I gebildet wird. Hierdurch wird erreicht, daß ein zusammenhängender Raum 4 gebildet wird, der vollständig mit Isoliermaterial 5 ausgefüllt ist. Die Verschlußbleche 9A und 9I sind vakuumdicht mit den Gehäusewandungen 2A und 2I verbunden, so daß der Raum 4 evakuiert werden kann. Wie anhand von Figur 2 weiter zu sehen ist, sind die Durchführungen 10 für die Kühlleitungen 11 und elektrischen Anschlußleitungen 12 zwischen den Speicherzellen 7 und dem Außenbereich auf der den Verschlußblechen gegenüberliegenden Seite des Gehäuses 2, insbesondere an dessen zweiter Stirnseite angeordnet. Jede Durchführung 10 wird auch hierbei durch eine als zylindrischer Faltenbalg ausgebildete Begrenzungswand 13 nach außenhin begrenzt. Die Begrenzungswand 13 ist aus Edelstahl gefertigt und höchstens 0,1 bis 0,2 mm dick. Zusätzlich ist sie mit der inneren und der äußeren Gehäusewandung 2A und 2I vakuumdicht verschweißt.

Durch den dauerhaften Verschluß des Gehäuses 2 mit den Verschlußblechen 9A und 9I kann die thermische Isolierung im Gegensatz zu der in Figur 1 dargestellten Ausführungsform kürzer ausgebildet werden. In ihrem Innenraum 6 können dennoch die gleiche Anzahl an Speicherzellen untergebracht werden. Es besteht andererseits die Möglichkeit, die hier gezeigte thermischen Isolierung ebensolang wie die in Figur 1 dargestellte auszubilden, und im Innenraum 6 eine größere Anzahl an Speicherzellen unterzubringen, als dies beim Verschluß des Gehäuses 2 durch einen Stopfen 9 der Fall ist.

Die Erfindung beschränkt sich nicht nur auf die in den Figuren 1 und 2 dargestellten Ausführungsbeispiele. Vielmehr umfaßt die Erfindung auch Ausführungsformen bei denen die Durchführungen 10 nicht auf der den Verschlußblechen 9A, 9I bzw. dem Stopfen 9 gegenüberliegenden Seite des Gehäuses angeordnet sind. Zu der Erfindung gehören auch Ausführungsbeispiele, bei denen die Durchführungen 10 im Bereich der an die Verschlußbleche 9A und 9I bzw. an den Stopfen 9 angrenzenden Seitenflächen des Gehäuses 2 angeordnet sind.

**Patentansprüche**

1. Thermische Isolierung (1) mit einem doppelwandigen Gehäuse (2), welches von den Gehäusewandungen (2A, 2I) gebildet wird, die einen mit Isoliermaterial (5) ausgefüllten Raum (4) bilden, der evakuiert ist und wobei zwischen dem Innenraum (6) des Gehäuses (2) und seinem Außenbereich Durchführungen (10) vorgesehen sind, und wobei das Gehäuse mit einem Verschluß (9) versehen ist, dadurch gekennzeichnet, daß das Gehäuse (2) im Verschlußbereich (9V) frei von Durchführungen (10) ist, und daß jede Begrenzungswand (13) einer jeden Durchführung gegenüber dem Abstand zwischen den Gehäusewandungen (2A, 2I) verlängert ist und vakuumdicht mit den Gehäusewandungen (2A, 2I) verbunden ist.

2. Thermische Isolierung nach Anspruch 1, dadurch gekennzeichnet, daß die Begrenzungswand (13) einer jeden Durchführung (10) als zylindrischer Faltenbalg ausgebildet ist.

3. Thermische Isolierung nach Anspruch 2, dadurch gekennzeichnet, daß jede Begrenzungswand (13) aus einem thermisch schlecht leitenden Werkstoff gefertigt und sehr dünn ausgebildet ist.

4. Thermische Isolierung nach einem der Ansprüche 2 oder 3, dadurch gekennzeichnet, daß jede Begrenzungswand (13) aus Edelstahl gefertigt und höchstens 0,1 bis 0,2 mm dick ist.

## Claims

1. Thermal insulation (1) with a double-walled housing (2) which is formed by the housing walls (2A, 2I) which form a space (4) which is filled with insulating material (5) and is evacuated and in which arrangement bushings (10) are provided between the internal space (6) of the housing (2) and its outside area and in which the housing is provided with a closure (9V), characterized in that the housing (2) is free of bushings (10) in the closing area (9V) and in that each boundary wall (13) of each bushing is elongated compared with the distance between the housing walls (2A, 2I) and is connected in a vacuum-tight manner to the housing walls (2A, 2I).

2. Thermal insulation according to Claim 1, characterized in that the boundary wall (13) of each bushing (10) is constructed as cylindrical bellows.

3. Thermal insulation according to Claim 2, characterized in that each boundary wall (13) is made of a material with poor thermal conductivity and is constructed to be very thin.

4. Thermal insulation according to one of claims 2 or 3, characterized in that each boundary wall (13) is made of stainless steel and has a maximum thickness of 0.1 to 0.2 mm.

## Revendications

1. Isolation thermique (1) comprenant un boîtier à double paroi (2) formé par les parois de boîtier (2A, 2I) qui définissent un espace (4) qui est rempli d'un matériau isolant (5) et dans lequel on a fait le vide, des passages (10) étant prévus entre l'espace intérieur (6) du boîtier (2) et sa zone extérieure et le boîtier étant muni d'un dispositif de fermeture (9V), caractérisée en ce que le boîtier (2) ne comporte pas de passages (10) dans la zone du dispositif de fermeture (9V) et en ce que chaque paroi de limitation (13) de chaque passage est prolongée par rapport à la distance entre les parois de boîtier (2A, 2I) et est reliée aux parois de boîtier (2A, 2I) de façon étanche au vide.

2. Isolation thermique selon la revendication 1, caractérisée en ce que la paroi de limitation (13) de chaque passage (10) est réalisée sous forme de soufflet cylindrique.

3. Isolation thermique selon la revendication 2, caractérisée en ce que chaque paroi de limitation (13) est fabriquée dans un matériau mauvais conducteur de chaleur et est très mince.

4. Isolation thermique selon l'une des revendications 2 ou 3, caractérisée en ce que chaque paroi de limitation (13) est fabriquée en acier spécial et a une épaisseur maximale comprise entre 0,1 et 0,2 mm.

Fig. 1

Fig. 2

EP 0 209 683 B1